(19) Europäisches Patentamt
European Patent Office
Office européen des brevets

(11) **EP 4 773 542 A1**

(12) **EUROPEAN PATENT APPLICATION**

(43) Date of publication:
08.07.2026 Bulletin 2026/28

(21) Application number: 25150252.2

(22) Date of filing: 03.01.2025

(51) International Patent Classification (IPC):
*H04L 9/08* (2006.01)          *H04L 9/14* (2006.01)

(52) Cooperative Patent Classification (CPC):
H04L 9/0825; H04L 9/0822; H04L 9/14;
H04L 2209/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Nagravision Sàrl
1033 Cheseaux-sur-Lausanne (CH)

(72) Inventors:
• NEDELCU, Adina
1033 Cheseaux-sur-Lausanne (CH)
• PIRET, Eric
1033 Cheseaux-sur-Lausanne (CH)
• VILLEGAS, Karine
1033 Cheseaux-sur-Lausanne (CH)

(74) Representative: Parker, Andrew James
Meissner Bolte Partnerschaft mbB
Patentanwälte Rechtsanwälte
Postfach 86 06 24
81633 München (DE)

(54) **SECURE DISTRIBUTION OF DIGITAL CONTENT**

(57)    A computer-implemented method for secure processing of a usage key or transfer of a usage key between a server and a data processing device, the usage key encodable to execute a cryptographic operation comprises: receiving, at the data processing device, the usage key encrypted according to a transportation encryption algorithm; processing, at the data processing device, the encrypted usage key with a modified version of a decryption routine of the transportation encryption algorithm, wherein the modified version of the decryption routine is such that it returns a modified version of the usage key, different from the usage key; and converting, at the data processing device, the modified version of the usage key into an encoding of the usage key, the encoding of the usage key operable to execute the cryptographic operation using the encoding of the usage key

Fig. 4A

Fig. 4B

**Description**

FIELD OF THE INVENTION

The present invention relates to encryption and decryption of digital contents, and more specifically to methods and systems for enhancing the security of decryption processes for digital content distribution and securing access to digital content.

BACKGROUND

Key provisioning is a process to transfer keys to a remote device or system in a secure way. Example of applications requiring key provisioning include bank payments, financial operations, healthcare, app management, access control, PayTv (including DRM), secure vault, gaming and e-commerce. The keys are often used for decrypting, encrypting content, or providing signatures.

Digital content, such as media (movies, TV shows, music and e-books), payment details, and other types of restricted or confidential information (e.g. medical and official records) need to be protected from unauthorized access. This type of digital content needs to be protected when transmitting it between a sender and a receiver device, and sometimes the digital content needs to remain in a protected form even when received at the receiving device. Keeping the digital content in a protected form ensures confidentiality and authenticity in the present case.

Media content is often protected with DRM technology, such as DRM technology used for streaming platforms. In this case, copyright-protected digital content may be distributed to devices such as PCs, smartphones, tablets, and smart TVs. DRM technology may also allow content providers to enforce various policies, such as content expiration, output restrictions, and device compatibility, to manage how content is accessed, shared, and viewed.

DRM systems may encrypt digital content to control how, when, and on which devices the content can be accessed. Before distribution, the content (such as a video, song, or e-book) may be encrypted using an encryption algorithm. This encryption renders the content unreadable unless decrypted with the content decryption key.

The secure exchange and storage of the content decryption key is therefore critical. However, the decryption of the content decryption key happens at the user device, which means that a potential attacker has full access to the execution environment when attempting to extract the plaintext (i.e. unencrypted) content decryption key. If successful, the extracted content decryption key may then be made public or distributed to other devices, allowing unauthorised users to access the digital content. Furthermore, adversaries may also attempt to reverse-engineer decryption algorithms or extract keys through side-channel and fault attacks, software analysis, or other advanced techniques.

The present invention has been devised in light of the above considerations.

SUMMARY OF THE INVENTION

The present invention relates to a computer-implemented method for the secure processing of a usage key for data transmission between a server and a data processing device, which is encodable for use in a cryptographic operation, which in some illustrative examples, may be a decryption routine of a usage encryption algorithm. Herein, the term "usage key" is used to refer to a key which is being transferred between the server and data processing device, with the intention that it is used at the data processing device in order to execute a cryptographic operation, such as decrypting digital content from a content provider, e.g. streaming platforms, which is encrypted using an encryption routine of the usage encryption algorithm.

Accordingly, a first aspect of the present invention may provide a computer-implemented method for secure processing and/or transfer of a usage key, e.g. for data transmission between a server and a data processing device, the usage key encodable to execute a cryptographic operation, the computer-implemented method comprising: receiving, at the data processing device, the usage key encrypted according to a transportation encryption algorithm; processing, at the data processing device, the encrypted usage key with a modified version of a decryption routine of the transportation encryption algorithm, wherein the modified version of the decryption routine is such that it returns a modified version of the usage key, different from the usage key; and converting, at the data processing device, the modified version of the usage key into an encoding of the usage key, the encoding of the usage key operable to execute the cryptographic operation. The cryptographic operation may comprise a routine of a usage algorithm, which may be a cryptographic algorithm.

The present invention is based on a realization that a decryption step of the transportation algorithm at the user device can be performed without revealing the usage key in plaintext form. The decryption step can be seen as a "partial decryption" which applies a "controlled" masking to the usage key. This masking may be configured such that it can be removed as part of a key encoding algorithm performed at a user's device. The usage key thus remains protected and inoperable until the usage key has been encoded for use with a cryptographic operation, which in some illustrative examples, may be white-box implementation of decryption routine of a usage encryption algorithm.

The usage key can be used for different cryptography operations such as decryption or encryption. Optionally, in addition to being configured to decrypt data, the usage key may also be configured for generating a signature. This is enabled for instance if the usage key is used in an authenticated encryption/decryption algorithm (such as AES-CCM/AES-GCM algorithms).

This method allows a fast transmission of a usage key, without any other protection (at the server) than encryption of the usage key according to a transportation encryption algorithm. The usage key is only being protected when necessary; in the critical step when the user device decrypts the usage key.

To avoid unauthorized possession and re-distribution of the usage key, the usage key can be protected by a multitude of versions of the transportation algorithm, which can be modified and periodically updated.

Security is enhanced in the device in a way that has no impact for the content provider. In certain illustrative implementations, a white-box implementation of a cryptographic operation may be kept secret and managed only by a technical solution provider, e.g. a technical third party responsible for managing the system. No white-box technology to protect secrets is required at the back-end (e.g. server side). This protection according to the present invention may instead be applied at the receiver/user device during execution of the decryption step of the transport algorithm. This means sharing potential white-box implementation secrets or technology with third parties can be avoided (which would otherwise be necessary to prevent the usage key from appearing in plaintext form).

In such a way, the present invention enhances security at the device without any overhead for the content provider. In some illustrative implementations, the white-box implementation may be kept secret from both parties and be managed only by a third-party solution provider.

We now discuss some specific optional features of the invention in more detail. It should be noted that the optional features set out below may be applied in any combination, except where context clearly dictates otherwise, or where two optional features are clearly technically incompatible with each other.

The computer-implemented method may comprise receiving, at the data processing device, the usage key encrypted according to a transportation encryption algorithm. The "transportation encryption algorithm" is an encryption algorithm which is used to conceal the usage key while it is in transit, to prevent malicious actors from obtaining the usage key in plaintext form, thereby enabling them to execute cryptographic operations in an unauthorized manner. The transportation encryption algorithm may have an encryption routine, in which the usage key (or any plaintext) is encrypted to generate an encrypted version of the usage key (or any other ciphertext), and a decryption routine in which the decrypted version of the usage key (or any other ciphertext) is decrypted to return the original usage key (or any other plaintext). More specifically, execution of the encryption routine of the transportation encryption algorithm may comprise using a transport encryption key to encrypt a plaintext such as the original usage key. Correspondingly, execution of the decryption routine of the transportation encryption algorithm may comprise using a transportation decryption key to decrypt a ciphertext such as the encrypted usage key.

The computer-implemented method may further comprise processing, at the data processing device, the encrypted usage key with a modified version of the decryption routine of the transportation encryption algorithm, and converting, at the data processing device, the modified version of the usage key into an encoding of the usage key. This encoding is operable to execute the cryptographic operation. Herein, an "encoding" of the usage key is an encoded version of the usage key which is operable to execute the cryptographic operation. The cryptographic operation, stored on the client device, may be white-boxed. More specifically, the cryptographic operation may comprise or be a white-box implementation of a cryptographic algorithm. The encoding of the usage key may accordingly be operable to execute the cryptographic operation by executing the white-box implementation of the cryptographic algorithm.

This means that the cryptographic operation is implemented such that it does not reveal information about the underlying cryptographic algorithm.

The cryptographic operation may comprise decryption of data using a decryption routine of a usage encryption algorithm, in which case the encoding of the usage key may be operable to decrypt data using the decryption routine of the usage encryption algorithm. In these cases, the cryptographic operation may comprise a white-box implementation of the decryption routine of the usage encryption algorithm. The encoding of the usage key may be operable to execute the cryptographic operation by executing the decryption routine of the white box implementation of the usage encryption algorithm. Again, this ensures that the decryption routine of the cryptographic algorithm is implemented such that it does not reveal any information about the underlying usage encryption algorithm.

The usage encryption algorithm may utilize a symmetric encryption scheme such as the Advanced Encryption Standard (AES). It may be stated that the usage encryption algorithm substantially implements the AES encryption algorithm, to include AES authenticated encryption modes (e.g. AES-CCM and AES GCM modes). Herein, "substantially implements" should be understood to mean that the usage encryption algorithm includes the AES encryption algorithm as well as any other implementations which deviate from the AES encryption algorithm in an immaterial manner, i.e. which perform essentially the same function as the AES encryption algorithm. Optionally, an encryption routine of the usage encryption algorithm may be a white-box implementation of an encryption routine of the usage encryption algorithm. In such cases, the usage encryption algorithm may substantially implement a white-box implementation of the AES encryption scheme.

Additionally or alternatively, the cryptographic operation may comprise encryption of data using an encryption routine of a usage encryption algorithm, in which case the encoding of the usage key may be operable to encrypt data using the encryption routine of the usage encryption algorithm. In these cases, the cryptographic operation may comprise a white-box implementation of the encryption routine of the usage encryption algorithm. The encoding of the usage key may be operable to execute the cryptographic operation by executing the white box implementation of the encryption routine of the usage encryption algorithm. Again, this ensures that the encryption routine of the cryptographic algorithm is implemented such that it does not reveal any information about the underlying usage encryption algorithm. The optional features set out in the previous paragraph, relating to symmetric encryption schemes such as AES, also apply to implementations of the invention in which the cryptographic operation is an encryption of data, rather than (or in addition to) a decryption of data.

Additionally or alternatively, the cryptographic operation may comprise a cryptographic signature algorithm, for example the application of a cryptographic signature (which may also be referred to as a digital signature algorithm) or the authentication or verification of a cryptographic signature. Accordingly, the encoding of the usage key may be operable to execute a signature application routine and/or signature verification/authentication routine of a cryptographic signature algorithm. The cryptographic operation may comprise a white-box implementation of the signature application routine and/or signature verification/authentication routine of a cryptographic signature algorithm. The encoding of the usage key many be operable to execute the cryptographic operation by executing the white-box implementation of the signature application routine and/or signature verification/authentication routine of a cryptographic signature algorithm. Various cryptographic signature algorithms may be used, without deviating from the scope of the present invention.

From the above, it will be appreciated that the cryptographic operation may comprise one, some, or all of decryption of data, encryption of data, signing of data, or verification of a signature. For example, the cryptographic operation may comprise a combination of encrypting and signing data, or verifying and decrypting data.

The computer-implemented method comprises receiving, at the data processing device, the usage key encrypted according to a transportation encryption algorithm. The encrypted usage key is then processed using a modified version of the decryption routine of the transportation encryption algorithm. This modified version is altered in such a way that it returns a modified version of the usage key, which is different from the original usage key. Subsequently, the modified version of the usage key is converted into an encoding of the usage key, which can be used to execute a cryptographic operation, which as discussed may be a modified or encoded version of an underlying cryptographic algorithm, such as a usage encryption algorithm (encryption or decryption routine) or cryptographic signature routine.

In one embodiment, the modified version of the decryption routine is obtained by applying a mask to the decryption routine of the transportation encryption algorithm. Applying a mask to the decryption routine of the transportation encryption algorithm may comprise applying a mask to a decryption key used during execution of the decryption routine of the transportation encryption algorithm. This ensures that the output of the modified decryption routine is a masked version of the corresponding output of the original decryption routine, i.e. a modified or masked version of the usage key. The mask used is preferably compatible with the transportation encryption algorithm. Alternatively put, the masked version of the usage key (or more broadly, the masked version of the corresponding output of the original decryption routine) may be equivalent to the usage key (or more broadly, the masked version of the corresponding output of the original decryption routine) masked with an intermediate mask, which may optionally be an arithmetic mask or a Boolean mask.

In the present application, and in cryptography more generally, the term "arithmetic masking" is used to refer to the masking of data using an arithmetic operation such as, but not limited to, addition or subtraction. On the other hand, Boolean masking is used to refer to masking using bitwise operations such as XOR to mask data at the bit level. For example, Boolean masking may involve applying a mask that is a binary value to the original data.

We now discuss the transportation encryption algorithm in more detail. In some implementations, the transportation encryption algorithm may be an asymmetric encryption algorithm. In some cases, the asymmetric encryption algorithm may be an elliptic curve based encryption algorithm. Many elliptic curve based encryption algorithms are known and are based on the principles of elliptic curve cryptography. ECIES (Elliptic Curve Integrated Encryption Scheme) or EC-EL Gamal are example of such encryption algorithms. Elliptic-curve cryptography (ECC) is an approach to public-key cryptography based on the algebraic structure of elliptic curves over finite fields. In ECC, many algorithms rely on the computational difficulty of the Elliptic Curve Discrete Logarithm Problem (ECDLP) for carefully chosen combinations of elliptic curve and finite field. The ECDLP may be articulated for a given elliptic curve over a given finite field as follows: starting from a generator point $G$ on the curve and given a point $P$ on the curve, find the integer $k$ (if it exists), such that $P = k * G$.

Accordingly, relative to the original usage key, the masked or modified version of the usage key is masked using an elliptic curve arithmetic mask, which may include an elliptic curve additive value. The transportation encryption algorithm may also be a malleable encryption algorithm. The modified version of the decryption routine may operate with a correspondingly modified version of the decryption key, which is equivalent to the result of a multiplication of the decryption key with a secret value. The transportation encryption algorithm may substantially implement ElGamal encryption[1]. This may be the elliptic-curve (EC) ElGamal algorithm[2] or, alternatively, the ElGamal algorithm over a prime field $\mathbb{F}_p$, also denoted as Galois field $GF(p)$, where $p$ is a prime number. $GF(p)$ may be, for example, the ring of integers modulo p. Alternatively, the transportation encryption algorithm may substantially implement one or more of AES encryption, or RSA encryption. It will be appreciated that other suitable transportation encryption algorithms could also be used, either symmetric or asymmetric.

[1] T. Elgamal, "A public key cryptosystem and a signature scheme based on discrete logarithms," in IEEE Transactions on Information Theory, vol. 31, no. 4, pp. 469-472, July 1985, doi: 10.1109/TIT.1985.1057074.

[2] Koblitz, Neal. "Elliptic Curve Cryptosystems." Mathematics of Computation 48, no. 177 (1987): 203-9. https://doi.org/10.2307/2007884.

Additionally or alternatively, relative to the original usage key, the masked or modified version of the original usage key may be masked by a prime-field arithmetic mask, which may be generated from an additive correction value based on the usage key. In some implementations, this additive mask may be generated alongside noise, including decoy data and computation. In some cases, the additive mask is an elliptic-curve coordinate additive mask.

We now discuss in more detail the conversion of the modified version of the usage key into an encoding of the usage key. We have already explained that the encrypted usage key is processed to give a modified version of the usage key, which may be equivalent to the original usage key with an intermediate mask applied to it. In some cases, the intermediate mask (or accordingly, the modified version of the usage key) may be compatible with the cryptographic operation (e.g. the routine of the usage algorithm or cryptographic algorithm). In the context of this application, by "compatible with", we mean that the intermediate mask is defined over a finite field having the same order as the finite field over which the cryptosystem or cryptographic algorithm used to implement the cryptographic operation (which may be a routine of the cryptographic algorithm) is defined. If the intermediate mask is not compatible with the cryptographic operation, converting the modified version of the usage key into an encoding of the usage key may comprise applying a mask conversion algorithm to the modified version of the usage key. More specifically, the intermediate mask may be an arithmetic mask, and converting the modified version of the usage key into an encoding of the usage key may comprise applying mask conversion algorithm of the modified version of the usage key. The mask conversion algorithm may be configured to convert the first mask into a second mask of a different type. The first mask may be defined over a finite field having a first order, and the second mask may be defined over a finite field having a second order. For example, the first mask may be an arithmetic mask which may be defined over a finite field having a prime order, and the second mask may be a Boolean mask (which, for compatibility with the AES cryptosystem, may be effectively defined over a field having order $2^n$). The mask conversion algorithm may comprise an implementation of Goubin's algorithm[3] for converting from arithmetic masking to Boolean masking. Alternatively put, the mask conversion algorithm may be configured to convert the intermediate mask into a second mask which is compatible with the cryptographic operation. It should be noted that other algorithms for converting from one type of mask to another type of mask are envisaged, and Goubin's algorithm is cited only as an illustrative example. Applicable algorithms for conversion from arithmetic to Boolean masking may include, for example, the Coron-Tchulkine[4] method, the Neiße-Pulkus[5] method, and Debraize's method[6]. This is it not an exhaustive list of conversion methods, and it will be readily appreciated that other schemes for conversion of arithmetic masking to Boolean masking are available.

[3] L. Goubin, "A Sound Method for Switching between Boolean and Arithmetic Masking". In Proceedings of CHES'2001, LNCS 2162, pp. 3-15, Springer-Verlag, 2001: http://www.goubin.fr/papers/arith-final.pdf

[4] Coron, J.-S., Tchulkine, A. "A New Algorithm for Switching from Arithmetic to Boolean Masking" Walter, C.D., Koç, Ç.K., Paar, C. (eds.) CHES 2003. LNCS, vol. 2779, pp. 89-97. Springer, Heidelberg (2003)

[5] NeiBe, O., Pulkus, J.: Switching Blindings with a View Towards IDEA. In: Joye, M., Quisquater, J.-J. (eds.) CHES 2004. LNCS, vol. 3156, pp. 230-239. Springer, Heidelberg (2004)

[6] Debraize, Blandine. "Efficient and provably secure methods for switching from arithmetic to boolean masking." Cryptographic Hardware and Embedded Systems-CHES 2012: 14th International Workshop, Leuven, Belgium, September 9-12, 2012. Proceedings 14. Springer Berlin Heidelberg, 2012.

Alternatively, the intermediate mask may be a Boolean mask, and the second mask may be an arithmetic mask. In these cases, applicable algorithms for conversion from Boolean to arithmetic masking may include, for example, Goubin's algorithm (Goubin proposes a scheme for both conversion of arithmetic masking to Boolean masking, and *vice versa*), the Hutter-Tunstall[7] method and Coron's method[8]. This is it not an exhaustive list of conversion methods, and it will be readily appreciated that other schemes for conversion of Boolean masking to arithmetic masking are available.

[7] Hutter, Michael & Tunstall, Michael. (2019). Constant-time higher-order Boolean-to-arithmetic masking. Journal of Cryptographic Engineering. 9. 10.1007/s13389-018-0191 -z.

[8] Coron, Jean-Sébastien. (2017). High-Order Conversion from Boolean to Arithmetic Masking. 93-114. 10.1007/978-3-319-66787-4_5.

In certain preferred embodiments, the mask conversion algorithm may include an error handling strategy for converting a prime-field arithmetic mask into a Boolean mask. This may involve receiving an input masked using modular addition in a prime field and returning an output masked using XOR to be used in a binary field (or a field of order $2^n$). The error handling strategy may include overflow and underflow prevention by temporarily extending the field order of a finite field.

When the intermediate mask (and accordingly, the modified version of the usage key) is compatible with the cryptographic operation, it may not be necessary to execute the mask conversion algorithm. Then, the conversion of the modified version of the usage key into an encoding may comprise applying a key encoding algorithm to the modified (or masked) version of the usage key. When the intermediate mask (and accordingly, the modified version of the usage key) is incompatible with the cryptographic operation, the conversion of the modified version of the usage key into an encoding may comprise applying the key encoding algorithm to an output of the mask conversion algorithm.

The key encoding algorithm may simultaneously expand and encode the modified version of the usage key. Applying the key encoding algorithm to the modified version of the usage key may comprise applying bitwise Boolean operators on sub-keys and/or performing byte substitutions based on lookup tables. The key encoding algorithm takes the modified version of the usage key as input and returns the encoding of the usage key. Hence, by applying a key encoding algorithm and simultaneously expanding and encoding the modified version of the usage key, the mask on the usage key is effectively removed in that an encoding of the unmasked usage key is generated. This encoding is essentially an obfuscated usage key which can be stored in the user device and which is operable for performing at least one cryptographic operation. The usage key can be configured for multiple cryptographic purposes such as encryption, decryption, signature, verification of signature, etc, as explained in more detail earlier in this disclosure. In an embodiment, the cryptographic operation to be performed may be decrypting digital content from a content delivery network.

More specifically, the key encoding algorithm may be a white-box implementation of a key encoding algorithm. This ensures that the key encoding algorithm itself remains hidden. The key encoding algorithm may be such that the encoding of the key it generates is usable with the cryptographic operation, or more specifically the white-box implementation of the cryptographic algorithm, as described earlier in this disclosure. Where, for example, the encoding of the usage key is used to execute a second cryptographic operation (e.g. a decryption operation, or a signature verification/authentication operation) on data which has already been processed elsewhere using a first cryptographic operation (e.g. an encryption operation or a signature application operation), the second cryptographic operation may be the inverse operation routine of the first cryptographic operation. Alternatively put, the first cryptographic operation and the second cryptographic operation may be inverse routines of the same usage algorithm (e.g. encryption and decryption routines of the same usage encryption algorithm, or application and verification routines of the same cryptographic signature algorithm, or both). More specifically, the key encoding algorithm may be such that the encoding of the usage key which is generated is usable to execute a white-box implementation of an inverse operation or routine of a usage algorithm which has already been applied to data, e.g. the white-box decryption routine of the usage encryption algorithm.

The data processing device may be any computing device such as a laptop computer, a desktop computer, a tablet, a smartphone, a set-top box, a connected television screen, or the like.

In certain embodiments, the transportation encryption algorithm may include a final step that uses a cryptographic hash function. In some of these certain embodiments, the transportation encryption algorithm may substantially implement any one of: the Module-Lattice-Based Key-Encapsulation Mechanism (ML-KEM), the Advanced Encryption Standard (AES), or the Data Encryption Standard (DES), or more generally any transportation encryption algorithm generating a decrypted plaintext in GF(p), EEC, or GF(2"). In some implementations, applying the mask to the decryption routine may involve using a masked protected cryptographic hash function.

In some scenarios, the method may further comprise generating the usage key at a server device during a key generation phase, encrypting the usage key according to the transportation encryption algorithm, and sending the encrypted usage key to the computing device.

A second aspect of the invention may provide a computer program or computer program product comprising instructions which, when the program is executed by a computer, cause the computer to execute a computer-implemented method for secure processing and/or transfer of a usage key, e.g. for data transmission between a server and a data processing device, the usage key encodable to execute a cryptographic operation, the computer-implemented method comprising: receiving, at the data processing device, the usage key encrypted according to a transportation encryption algorithm; processing, at the data processing device, the encrypted usage key with a modified version of a decryption routine of the transportation encryption algorithm, wherein the modified version of the decryption routine is such that it returns a modified version of the usage key, different from the usage key; and converting, at the data processing device, the modified version of the usage key into an encoding of the usage key, the encoding of the usage key operable to execute the cryptographic operation. The computer program or computer program product may be provided in the form of a downloadable file which may be offered for sale on e.g. an application store, and which may be installed or stored on a user device to enable that user device to execute the computer-implemented method. The optional features set out in respect of the first aspect of the present invention are also equally applicable to the second aspect of the invention.

A third aspect of the invention provides a computer-readable storage medium comprising instructions, which when executed by a computer, cause the computer to execute a computer-implemented method a computer-implemented method for secure processing or transfer of a usage key, e.g. for data transmission between a server and a data processing device, the usage key encodable to execute a cryptographic operation, the computer-implemented method comprising: receiving, at the data processing device, the usage key encrypted according to a transportation encryption algorithm; processing, at the data processing device, the encrypted usage key with a modified version of a decryption routine of the transportation encryption algorithm, wherein the modified version of the decryption routine is such that it returns a modified version of the usage key, different from the usage key; and converting, at the data processing device, the modified version of the usage key into an encoding of the usage key, the encoding of the usage key operable to execute the cryptographic operation. The optional features set out in respect of the first and second aspects of the present invention are also equally applicable to the third aspect of the invention.

A fourth aspect of the invention provides a system comprising a processor configured to execute a computer-implemented method a computer-implemented method for secure processing or transfer of a usage key, e.g. for data transmission between a server and a data processing device, the usage key encodable to execute a cryptographic operation, the computer-implemented method comprising: receiving, at the data processing device, the usage key encrypted according to a transportation encryption algorithm; processing, at the data processing device, the encrypted usage key with a modified version of a decryption routine of the transportation encryption algorithm, wherein the modified version of the decryption routine is such that it returns a modified version of the usage key, different from the usage key; and converting, at the data processing device, the modified version of the usage key into an encoding of the usage key, the encoding of the usage key operable to execute the cryptographic operation. The optional features set out in respect of the first, second, and third aspects of the present invention are also equally applicable to the fourth aspect of the invention.

The invention includes the combination of the aspects and preferred features described except where such a combination is clearly impermissible or expressly avoided.

## SUMMARY OF THE FIGURES

Embodiments and experiments illustrating the principles of the invention will now be discussed with reference to the accompanying figures in which:

- **Figure 1** illustrates an overview of an example system architecture configured to execute the method for secure distribution of digital content according to one embodiment of the invention.

- **Figure 2** depicts a diagram of a first prior art process for secure distribution of digital content.

- **Figure 3** depicts a diagram of a second prior art process for secure distribution of digital content.

- **Figure 4** depicts a diagram of the method for secure distribution of digital content according to one embodiment of the invention.

- **Figure 5** shows a flowchart of the method for secure distribution of digital content according to one or more embodiments of the invention.

- **Figures 6A and 6B** provide data flow diagrams of methods for secure distribution of digital content according to one or more embodiments of the invention.

- **Figure 7** depicts a diagram of an example process for setting up an example computing environment configured to execute the method for secure distribution of digital content according to one preferred embodiment of the invention.

- **Figure 8** illustrates an example arithmetic masking technique according to one preferred embodiment of the invention.

- **Figure 9** illustrates an example technique for implementing the conversion from arithmetic masking to Boolean masking according to one preferred embodiment of the invention.

- **Figure 10** illustrates an example implementation of key expansion with encoding according to one preferred embodiment of the invention.

- **Figure 11** provides a side-by-side comparison of the first prior art process for secure distribution of digital content and the method for secure distribution of digital content according to one preferred embodiment of the invention.

## DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

In cryptography, keys are essential for various algorithms like encryption, decryption, digital signatures, etc., and they often need to be represented in a readable or standardized format for interoperability. The key expansion process in AES takes the initial key and generates multiple sub-keys for each round of encryption. The number of rounds and sub-keys generated depends on the key length. In white-box cryptography, the AES key is not directly used in the algorithm in its standard form. Instead, the original AES key is encoded (e.g. transformed and split into various parts). Key expansion and encoding are not the same, although both relate to enhancing the security of cryptographic algorithms. They serve different purposes and are normally used in different contexts.

White-box implementations of algorithms like AES involve techniques such as obfuscation, table lookups, and key splitting to ensure that even if an attacker can run the software and observe its behaviour, they cannot retrieve the key used in encryption. This is particularly useful in environments where the software is exposed to untrusted parties (e.g., in DRM systems or mobile apps). The goal of white-box cryptography is to protect the cryptographic key and algorithm in environments where the attacker has access to the implementation itself. It is a defence against attacks that target the key by exploiting access to the software running the cryptography.

During cryptographic computations, intermediate values can sometimes leak information about the secret. Masked values may be used in cryptographic operations (like encryption or decryption). Applying a mask and performing operations on masked values provides protection against leakage of sensitive information. The mask may be random.

In AES, Boolean masking may be used to help protect intermediate results by ensuring they are never exposed in their raw form. In XOR masking, to retrieve the original secret value, the masked result of the computation may be XOR'd with the mask again.

Arithmetic masking is a cryptographic technique used to protect sensitive data by combining it with a random or secret value (a "mask") in a way that applies arithmetic operations, rather than just Boolean operations like XOR, to obscure the data. The purpose of arithmetic masking is to protect data, particularly during cryptographic computations, from being leaked through side-channel attacks (such as power analysis, timing attacks, etc.) or other vulnerabilities by ensuring that the real data is never directly exposed during computation.

In arithmetic masking, a secret value (e.g., a cryptographic key or sensitive data) is "masked" by performing arithmetic operations (such as addition or subtraction) with a mask. Typically, the mask is a random or fixed value that is kept private. The idea is to perform cryptographic computations on the masked values rather than the original data, making it harder for attackers to recover the original values.

Arithmetic masking uses arithmetic operations (such as addition or subtraction) to mask data, and is often used in more advanced cryptographic settings where simple Boolean operations might not provide sufficient security or where operations need to be performed on numerical values rather than binary data.

The present invention may be used, for example, to enhance security of digital rights management (DRM) technology for data streaming.

In the following description, the digital content will be related to a DRM system. However, the present invention can be applied in other contexts requiring secure key provisioning, e.g. payment (or finance more broadly), healthcare, application management, access control, pay-per-view television (more broadly than DRM), security, gaming, e-commerce, and the like.,

A license server generates and manages licenses for the encrypted content. Each license contains the decryption key (the "content decryption key") and the playback rules.

In DRM systems, asymmetric encryption is often converted into symmetric encryption during content protection because symmetric encryption is faster and more efficient for handling large volumes of data, such as audio and video files.

In DRM systems, asymmetric encryption is primarily used to securely distribute and exchange the symmetric key (also called the content decryption key) needed to decrypt the media file. The symmetric key is encrypted with an asymmetric algorithm (e.g., RSA) and sent to the user's device as part of the DRM license. The content provider generates a symmetric key to encrypt the media file using a fast symmetric algorithm (e.g., AES). This symmetric key is then encrypted with the user's public key (in an asymmetric scheme). Hence, in some specific cases, to which the present invention is by no means limited, the content itself may be encrypted with a symmetric algorithm (AES). Only the intended recipient, who has the corresponding private key, can decrypt this encrypted symmetric key, ensuring that the symmetric key remains secure during transmission. This hybrid approach allows DRM to benefit from the security of asymmetric encryption for key exchange while leveraging the speed of symmetric encryption for content decryption.

The user's device decrypts this AES key using its secret (decryption) key, stores the AES key in the user's device and uses the AES key to decrypt the content in real-time. This method also minimizes the exposure of sensitive asymmetric keys. The symmetric keys can be frequently rotated (changed for each piece of content or session), which is more difficult to manage with asymmetric keys.

Symmetric encryption algorithms (like AES) are much faster than asymmetric ones (like RSA or ElGamal) when encrypting large files. Since media files in DRM contexts can be very large, symmetric encryption provides the needed speed and performance to handle them without introducing significant processing delays. Symmetric encryption has lower computational overhead, making it more suitable for real-time playback of encrypted content, which is essential for a seamless user experience.

The examples described below relate to an implementation of the invention in the context of AES encrypted digital content, but it will be apparent that this is merely an example, and should not be treated as limiting on the scope of application of the invention. It should also be stressed that the DRM context mentioned above is an illustrative example only, and the invention could be applied in myriad other contexts.

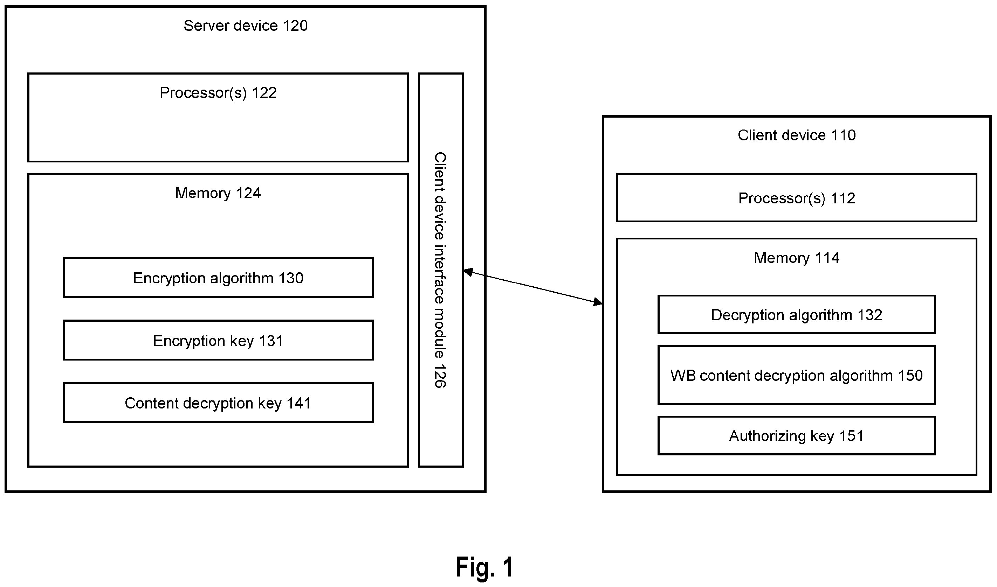

Fig. 1 is a system diagram depicting an example of a system which may be configured to execute the computer-implemented method of the present invention. In one embodiment, the system comprises a client device 110 and a server device 120. However, all of the computation involved in the computer-implemented method according to the first aspect of the present invention may be executed at the client device 110. The client device 110 may be a user device which requests the digital content. The client device 110 may comprise one or more processors 112 and memory 114. The client device 110 may be connected to the server device 120 via a client device interface module 126 of the server device 120. The connection may be via a network. Alternatively, the connection may be a direct connection, such as a wired or wireless connection, e.g. a Wi-Fi connection or a Bluetooth connection. The server device 120 comprises one or more processor(s) 122, a memory 124 and a client device interface module 126. Herein, the term "module" refers to a functional module of the device, which may be implemented in the form of hardware (i.e. a specific hardware module), or software (i.e. code, which when executed by the one or more processors 122, causes the one or more processors to execute the computer-implemented method of the first aspect of the invention). The memory 124 may store the encryption algorithm 130 and the encryption key 131 associated with the encryption algorithm 130. The memory 124 may also store the content decryption key 141.

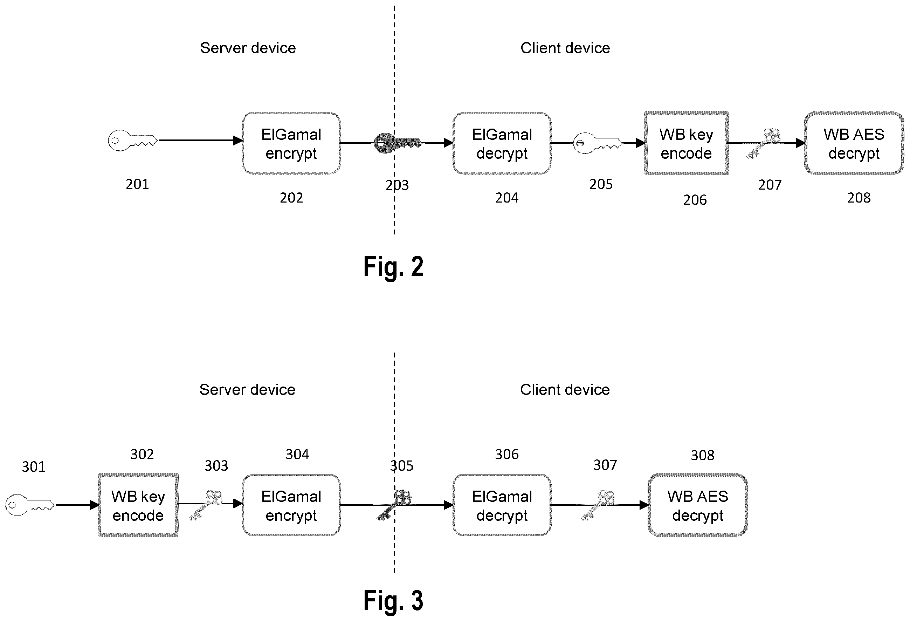

Fig. 2 illustrates a first prior art process for secure distribution of AES-encrypted digital content. An AES key 201 is transmitted by the server device in encrypted form 203. Encryption 202 is performed by the server device using an elliptic-curve ElGamal encryption algorithm. A corresponding elliptic-curve ElGamal decryption routine 204 is then executed to decrypt the ciphertext AES key 203 received at the client device into the plaintext AES key 205. In this process, AES key 201, 205 is exposed (in plaintext form, represented by the white key) as a result of the decryption process 204 at the client device, thereby creating a vulnerability where an unauthorized entity, such as a pirate, could gain access to the AES key 205 and potentially distribute it to other unauthorized parties to enable unauthorized content decryption. The decrypted AES key 205 is subsequently encoded as encoded key 207 using white-box key encoding algorithm 206, which is a key encoding mechanism designed to be used in conjunction with the white-box AES decryption routine 208 to prevent the AES key 201, 205 from being revealed during content decryption. In a white-box cryptographic routine, the encryption algorithm and key material are hidden (e.g. using encryption and/or obfuscation techniques) in such a way that they cannot be easily extracted even if an attacker gains full access to the application code or the running environment (as it may be the case if the attacker has control of the client device). Nevertheless, a vulnerability arises because the AES key 205 is computed in plaintext form before it is encoded for use with the white-box AES decryption routine 208.

Fig. 3 illustrates a second prior art process for secure distribution of AES-encrypted digital content. In this process, the AES key 301 is encoded as encoded key 303 using white-box key encoding algorithm 302 at the server device. The white-box key encoding algorithm 302 is again a key encoding mechanism designed to be used in conjunction with the white-box AES decryption routine 308 to prevent the AES key 301 from being revealed during content decryption. In this case, the AES key 301 is never exposed, but the white-box key encoding algorithm is stored and run on the server device, allowing the content provider to potentially observe and extract proprietary information about the algorithm and/or the white-boxing techniques used.

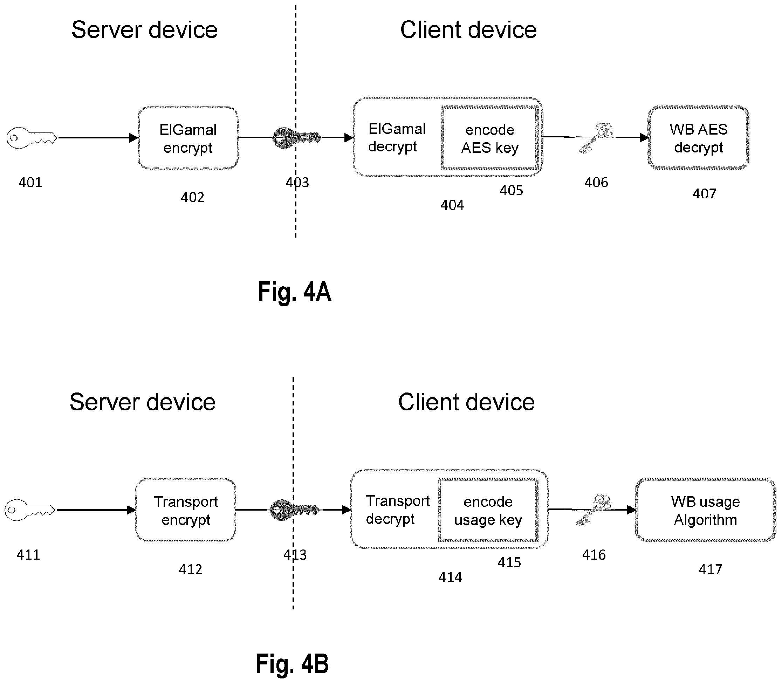

Fig. 4A depicts, at a high-level, a computer-implemented method of secure distribution of digital content according to one specific embodiment of the invention, whereas Fig. 4B depicts a more generic embodiment of the invention. In the specific embodiment of Fig. 4A, the digital content is encrypted with AES. However, it will be appreciated that other types of encryption are possible, such as asymmetric encryption algorithms or other symmetric encryption algorithms, within the scope of the present invention. For simplicity, the encryption algorithm in the following described examples will be AES. In these examples, the specific term "AES key" should be interpreted such as to be interchangeable with the generic term "usage key" and so on. The AES key 401 may be encrypted at the server device using a transportation algorithm. The transportation algorithm can be any type of encryption algorithm configured to allow arithmetic masking. In the following described examples, the transportation algorithm will be an elliptic-curve ElGamal encryption algorithm. In these examples, the specific term "elliptic-curve ElGamal encryption algorithm" should be interpreted such as to be interchangeable with the generic term "transportation algorithm" and so on. In the illustrated example, the AES key 401 may be encrypted at the server device using elliptic-curve ElGamal encryption algorithm 402 into ciphertext 403, which is transmitted to the client device. Upon receipt of the ciphertext 403, the client device may execute the decryption routine 404 of the elliptic-curve ElGamal encryption algorithm using a modified version of the secret (decryption) key of the AES algorithm. In such a way, the result of this computation will not be the plaintext AES key 401 but rather a modified value equivalent to the AES key 401 masked by an additive value on the elliptic curve, for example. This is done by exploiting the malleability property of ElGamal encryption[9]. In one example, the difference (i.e. the additive difference) between the plaintext AES key 401 and the modified value is due to masking achieved by elliptic curve scalar multiplication of the algorithm's secret key with a secret value. In one embodiment, the x-coordinate of the result point on the elliptic curve may be calculated. Additionally, an adjustment value for this coordinate may be determined based at least in part on the value of the encrypted message, which makes the masking different from one execution to another. For compatibility with the white-box AES decryption routine 407, the additive masking may be converted into a Boolean masking. This conversion may be achieved through adaptation of Louis Goubin's conversion algorithm (or any other improvements published), or another suitable algorithm. As in ElGamal computation, the values handled are results of modular operations, Goubin's conversion algorithm may be adapted for conversion from additive modular arithmetic masking to Boolean masking.

[9] **Malleability** is a property of some cryptographic algorithms; an encryption algorithm is "malleable" if it is possible to transform a ciphertext into another ciphertext which decrypts to a related plaintext.

The result of this conversion is a Boolean-masked key. This Boolean-masked key may then be encoded (e.g., by simultaneously applying AES key expansion and key encoding) into encoded key 406 using the white-box key encoding algorithm 405, which is a key encoding mechanism designed to be used in conjunction with the white-box AES decryption routine 407 to prevent the AES key 401 from being revealed during content decryption. Key encoding may comprise, for example, an affine transformation in a Galois field. In one implementation, the white-box key encoding algorithm 405 may comprise the use of bitwise operations (e.g. XOR) on sub-keys. In one example, this includes the use of a specific lookup table to implement the XOR of encoded sub-key bytes, resulting in an encoded sub-key for the next round. Additionally or alternatively, the white-box key encoding algorithm 405 may comprise the use of bytes substitution based on S-boxes (or even "U-boxes" that perform the decoding, S-boxing, and re-encoding steps). The key encoding algorithm is designed to compute an encoding of the unmasked AES key, the encoding operable for use with the white-box AES decryption routine 407. The resulting encoded key 406 may then be used with the white-box AES decryption routine 407 to decrypt the digital content at the client device.

The current invention is not limited to the ElGamal encryption, and other suitable asymmetric encryption protocols may include the Diffie-Hellman (DH) and Module-Lattice-based Key-Encapsulation Mechanism (ML-KEM). To enhance the resistance from attacks from quantum computers, a solution is to replace ElGamal with an asymmetrical algorithm that is quantum resistant, like ML-KEM. The skilled person will also understand that it would be possible to replace the asymmetric encryption with a symmetric encryption if desired. In all implementations, a "secure bridge" is established between the two encryption algorithms (e.g. between the asymmetric encryption and the symmetric encryption algorithms), which ensures end-to-end protection (between the server and the remote computing device) for the content decryption key and the content decryption routine. In some preferred embodiments, a symmetric key is used as the content decryption key and it is encrypted with asymmetric encryption for confidential delivery to a user. The user is issued with an authorizing key called the 'transport key' (e.g. a modified version of the asymmetric encryption algorithm's secret key) which can be used to simultaneously decrypt and encode the symmetric key encrypted with asymmetric encryption. In a preferred embodiment, the asymmetric encryption and decryption routines are implemented using ElGamal encryption. To avoid exposing the symmetric key at the receiver end, the encrypted symmetric key may be simultaneously obfuscated, decrypted and encoded by the client device.

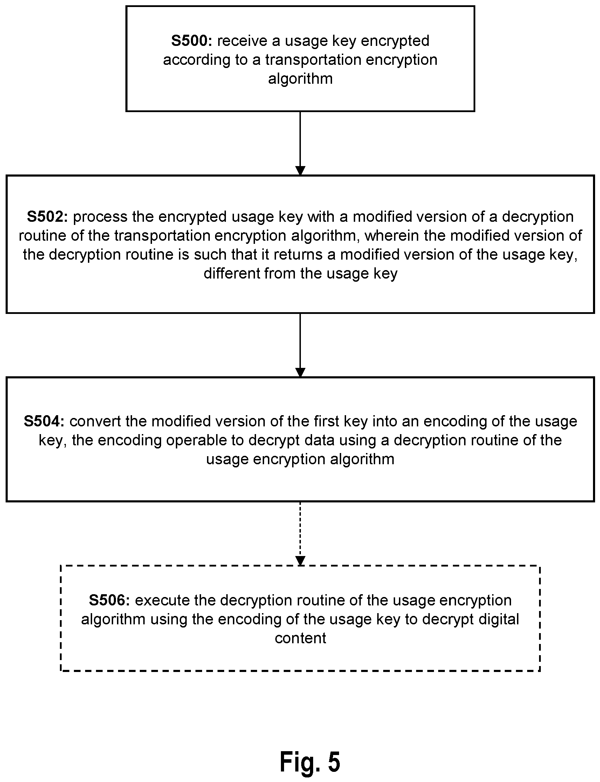

Fig. 5 shows a high-level series of steps which may be executed by the client device 110 depicted in Fig. 1. In a first step S500, a usage key encrypted according to a transportation encryption algorithm is received at the client device 110. The encrypted usage key may originate from the server device 120 and be received at the client device 110 via the client device interface module 126. In step S502, the encrypted usage key is processed using a modified version of a decryption routine of the transportation encryption algorithm, the modified version of the decryption routine being such that it returns a modified version of the usage key which is different from the usage key. The modification to the usage key may be equivalent to a masking of the usage key. Then, in step S504, the modified version of the usage key is converted to an encoding of the usage key, the encoding operable to decrypt data using a decryption routine of the usage encryption algorithm. In the final optional step S506, the decryption routine of the usage encryption algorithm is executed using the encoding of the usage key, to decrypt the digital content.

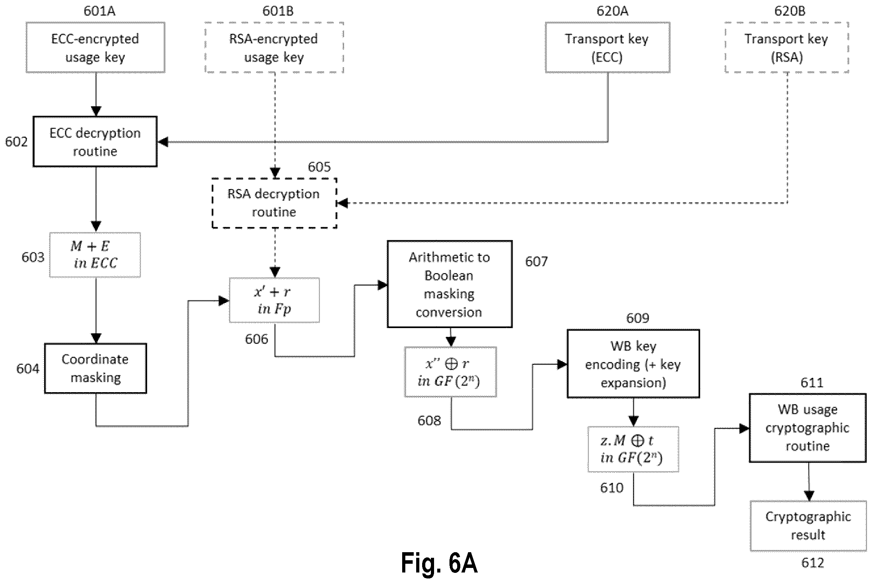

Fig. 6A shows possible dataflow paths for some of the embodiments of the invention. One embodiment may follow the A path (i.e. 601A, 620A, 602, 603, 604, 606, 607, 608, 609, 610, 611, 612). An alternative embodiment may follow the B path (i.e. 601B, 620B, 605, 606, 607, 608, 609, 610, 611, 612). Other embodiments may follow a combination of paths A and B. Some embodiments may skip steps or include additional steps not shown in either path, and so on.

In one embodiment following the A path (i.e. 601A, 620A, 602, 603, 604, 606, 607, 608, 609, 610, 611, 612), the content decryption key is encrypted with a malleable encryption algorithm using elliptic curve cryptography (ECC). In this embodiment, the ECC-encrypted content decryption key 601A received at the client device is processed by the decryption routine 602 of the ECC encryption algorithm using transport key 620A, which generates an output value 603 that corresponds to the decrypted content decryption key altered by elliptic-curve arithmetic masking. The transport key 620A corresponds to the secret key of the ECC encryption algorithm (i.e. the decryption key of the transportation algorithm) altered, for example, by multiplication with a secret value. As the decryption key of the transportation algorithm is altered, a coordinate masking can be applied to the output value 603 at step 604. The abscissa (x-coordinate) of the elliptic curve point corresponding to the output value 603 may be calculated. In some implementations, an adjustment value, which may be determined based at least in part on the value of the content decryption key, is adopted as an additive correction value for coordinate additive masking 604 of the EC point 603.

In some scenarios, the adjustment value may be determined by a server device, or by a third party, and received by the client device (e.g. in any encrypted form, or even as plaintext).

The coordinate additive masking 604 of the EC point 603 with the additive correction value effectively adds a further mask to the already masked content decryption key. In implementations where the additive correction value is dependent on the content decryption key, this further mask may be different from one execution to another. Noise may also be added to the coordinate masking 604 computation to conceal the operations performed from a potential attacker (e.g. a 'listener' attempting a side-channel attack). Noise may include decoy data and/or decoy computation, such as mock data and/or mock processing, or any form of computation that is unrelated, verbose or unnecessary to carrying out the coordinate masking 604 routine (e.g. substituting an operation with a number of other operations that result in the same output as the original operation but may be more difficult to logically follow and/or may decouple the logical steps performed from the actual amount of processing, thereby disrupting side-channel attacks).

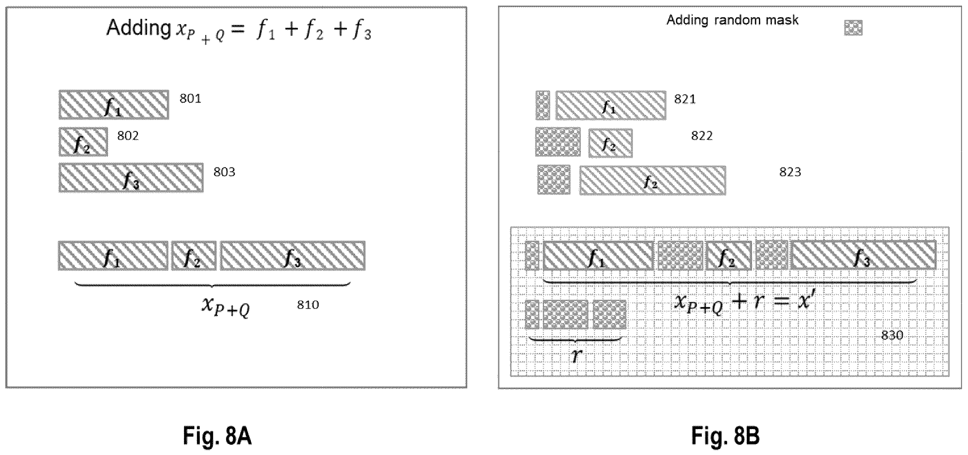

Fig. 8A shows the coordinate calculation without the further masking layer. Fig. 8B shows the coordinate additive masking calculation with the use of an additive correction value and noise.

The output 606 of the coordinate additive masking 604 is a value in a prime field $\mathbb{F}_p$ , or alternatively denoted as Galois field $GF(p)$. The value is a modular ($mod\ p$) value equivalent to the value of abscissa $x'$ of the EC point 603 further masked by a modular ($mod\ p$) additive mask $r$.

At step 607, the modular additive mask r is converted into an equivalent mask in a finite field compatible with the white-box content decryption routine and key encoding algorithm. The conversion may be achieved using any suitable mask conversion algorithm. In embodiments where AES is used for the white-box content decryption routine, the modular additive mask may be converted into a Boolean mask for AES compatibility. This conversion can be achieved through adaption of Louis Goubin's conversion algorithm (or any other related or improved algorithm) for conversion from modular additive masking to Boolean masking. Boolean masking may be, for example, XOR masking. Therefore, the output 608 of the conversion may be $x'' \oplus r$ where:

$$x'' \oplus r = x' + r\ mod\ 2n$$

At step 609, the converted masked value 608 is processed by the key encoding algorithm associated with the white-box content decryption routine to generate the encoded key or key schedule 610 expected by the white-box content decryption routine 611. In the case of AES, key encoding may be performed at the same time as AES key expansion such that sub-key encoding is performed at each round of expansion so as to generate an encoded AES key schedule 610. In other implementations, key expansion may be omitted.

Finally, the encoded key or key schedule 610 is used with the white-box content decryption routine 611 to decrypt the content 612.

In an alternative embodiment following the B path (i.e. 601B, 620B, 605, 606, 607, 608, 609, 610, 611, 612), the content decryption key is encrypted with a malleable encryption algorithm using the Rivest-Shamir-Adleman cryptosystem (RSA). In this alternative embodiment, the RSA-encrypted content decryption key 601B received at the client device is processed by the decryption routine 605 of the RSA encryption algorithm using transport key 620B, which generates an output value 606 that corresponds to the decrypted content decryption key altered by modular arithmetic masking. The transport key 620B corresponds to the secret key of the RSA encryption algorithm (i.e. the decryption key of the algorithm) altered, for example, by masking with a secret value. The remaining steps may then be executed.

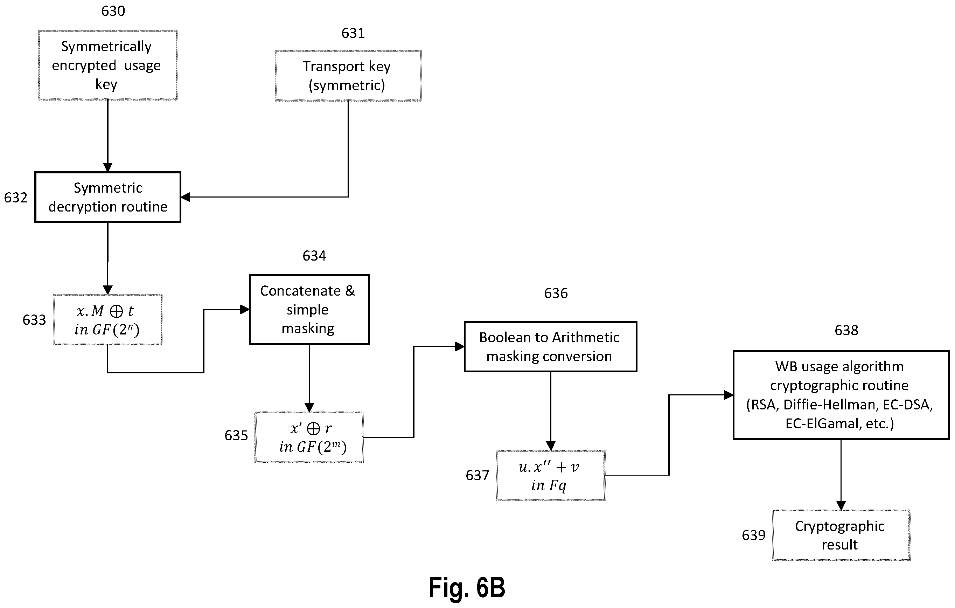

Fig. 6B shows possible dataflow paths for some other possible embodiments of the invention. In these other embodiments, the transportation algorithm is a symmetric encryption algorithm (e.g. AES) and the usage algorithm is an asymmetric scheme (e.g. RSA encryption/decryption, a Diffie-Hellman key exchange, an Elliptic Curve Digital Signature Algorithm, or Elliptic Curve ElGamal encryption/decryption). In these embodiments, the transportation algorithm is defined over a finite field compatible with Boolean masking (such as a Galois field of order $2^n$), whereas the usage algorithm is defined over a finite field compatible with arithmetic masking. Therefore, in these embodiments, it is a Boolean mask to be later converted into an arithmetic mask using a mask conversion algorithm.

In some examples, the symmetrically encrypted usage key 630 (i.e. the encryption of the usage key generated using the encryption routine of the transportation algorithm with its symmetric encryption/decryption key) is processed by a decryption routine 632 of the transportation algorithm using a transport key 631. The transport key 631 may be a modified version of the symmetric encryption/decryption key of the transportation algorithm which, when used with the decryption routine 632 of the transportation algorithm, causes the decryption routine 632 to output a masked decryption output 633. The masked decryption output 633 may correspond to a masked version of an encoding of the usage key, or of the expanded usage key, or of an expanded encoding of the usage key. This masked version is masked by Boolean masking, such as XOR masking.

The masked decryption output 633 is then processed by a concatenator 634 configured to reconstruct a masked version of the usage key from the masked version of the usage key encoding and/or expansion. The output 635 of this concatenation corresponds to the usage key masked by Boolean masking (e.g. XOR masking).

At step 636, the Boolean mask r is converted into an equivalent mask in a finite field compatible with the white-box usage algorithm's cryptographic routine. The conversion may be achieved using any suitable mask conversion algorithm. In some embodiments, this conversion can be achieved through adaptation of Louis Goubin's conversion algorithm (or any other related or improved algorithm) for conversion from Boolean masking to arithmetic masking. In other embodiments, Coron's method may be used instead. Arithmetic masking may be, for example, additive masking. In addition or during the conversion, a key encoding algorithm associated with the white-box usage algorithm may also be applied to obtain the encoded key or key schedule 637 expected by the white-box usage algorithm's cryptographic routine 638. In some cases, key encoding may be performed at the same time as key expansion such that sub-key encoding is performed at each round of expansion so as to generate an encoded key schedule 637. Depending on the implementation of the usage algorithm's cryptographic routine 638, key expansion may or may not be necessary.

Finally, the encoded key or key schedule 637 is used with the white-box usage algorithm's cryptographic routine 638 to obtain the cryptographic result 639 of the cryptographic operation performed by the routine 638.

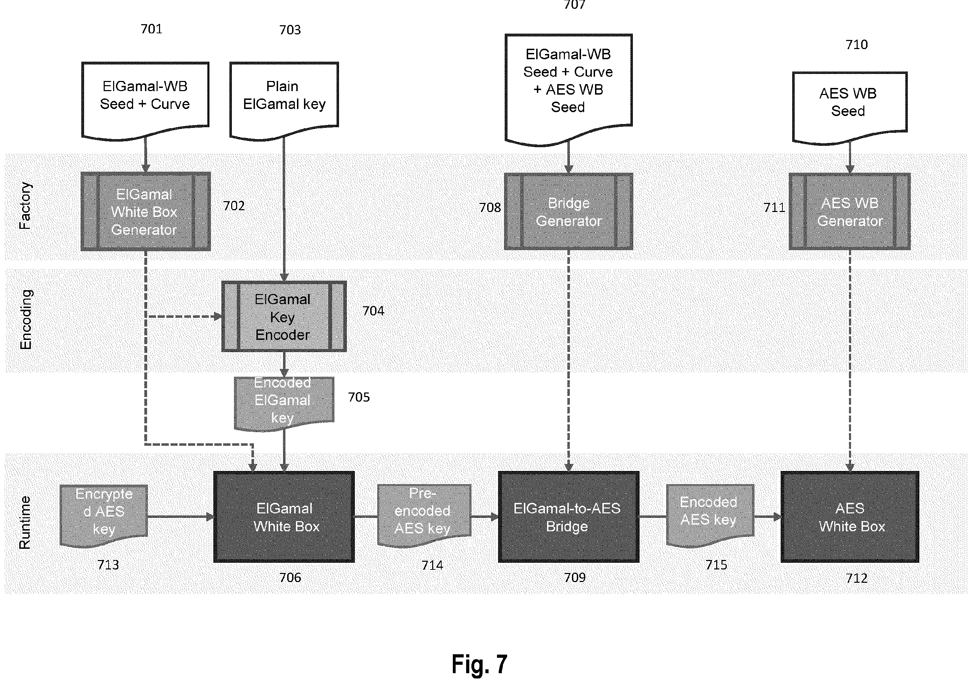

Fig. 7 depicts a diagram of an example process for setting up an example computing environment configured to execute the method for secure distribution of digital content according to one preferred embodiment of the invention. In this preferred embodiment, the content is encrypted using AES and the content decryption key is an AES key. The AES key is encrypted using elliptic-curve (EC) ElGamal encryption. At the bottom is the runtime technology stack and the intermediate values between the computational blocks. The white-boxed EC-ElGamal decryption routine 706 is built using an EC-ElGamal white-box generator 702 with an ElGamal white-box seed and an elliptic curve as input 701. Its output is then used by an EC-ElGamal key encoder 704 to encode the plaintext secret key 703 generated in the keygen phase of the EC-ElGamal encryption algorithm (i.e. the decryption key). The output 705 is the white-box encoded secret key, i.e. the secret key encoded for use with the white-boxed EC-ElGamal decryption routine 706. This key 705 can be used as the transport key when processing the encrypted AES key 713 in the white-boxed EC-ElGamal decryption routine 706, which will return a pre-encoded AES key 714 as output. This can then be processed by a bridge architecture 706 to generate the encoded AES key 715, which can then be used with the white-boxed AES decryption routine 712 to decrypt the AES-encrypted content. The white-boxed AES decryption routine 712 is built using an AES white-box generator 711 with an AES white-box seed as input 710. The bridge architecture 709 is built using a bridge generator 708 with the ElGamal white-box seed, the elliptic curve, and the AES white-box seed as input 707. Generation of the bridge 709 using the same seeds and elliptic curve used for generating the two white boxes 706, 712 ensures consistency and compatibility between the three computational blocks.

Fig. 8 illustrates an example arithmetic masking technique according to one preferred embodiment of the invention. Fig. 8A shows the coordinate calculation without the further masking layer. Fig. 8B shows the coordinate additive masking calculation with the use of an additive correction value and noise. The abscissa computation may be implemented in different ways depending on the representation used for the coordinate. In one example, the Jacobian representation may be used.

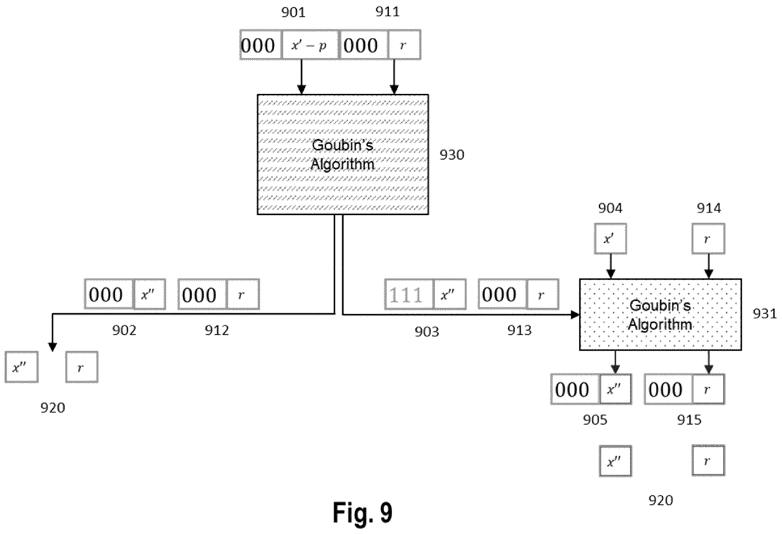

Fig. 9 illustrates an example technique for implementing the conversion from arithmetic masking to Boolean masking according to one preferred embodiment of the invention. In some implementations, Goubin's algorithm is adapted for conversion of a value masked using modular addition (arithmetic masking) into a value masked using XOR (Boolean masking).

Therefore, the output 920 of the conversion is $x'' \oplus r$ where:

$$x'' \oplus r = x' + r \bmod 2n$$

The r value may be hidden by bit expansion and may only be later recovered by applying the correct compression algorithm, which may be kept secret.

The formal steps of Goubin's conversion algorithm 930, 931 are summarized below:

    1. Initialize a random value $\gamma$

    2. Compute:

$$T = 2\gamma$$

$$x'' = \gamma \oplus r$$

$$\Omega = \gamma \wedge x''$$

$$x'' = T \oplus x'$$

$$\Gamma = \gamma \oplus x''$$

$$\Gamma = \Gamma \wedge r$$

$$\Omega = \Omega \oplus \Gamma$$

$$\Gamma = T \wedge x'$$

$$\Omega = \Omega \oplus \Gamma$$

3. Repeat the steps for $k$ = 1 to $n$ - 1:

$$\Gamma = T \wedge r$$

$$\Gamma = \Gamma \oplus \Omega$$

$$T = T \wedge x'$$

$$\Gamma = \Gamma \oplus T$$

$$T = 2\Gamma$$

4. Compute $x'' = x'' \oplus T$

When used for conversion from modular addition (modulo prime p), where:

$$|p| = n$$

the wrap-around nature of modular arithmetic means that off-the-shelf application of Goubin's conversion algorithm, which is devised for arithmetic-to-Boolean conversion, may lead to computing one or more out-of-range values (i.e. overflows and/or underflows) that would possibly result in aborted computation or an unintended output. Calculation of out-of-range values may occur in the following two cases:

A. When $x' + r \leq p,\ p < 2^n$:

- $x' + r$ is within range (does not overflow)
- $(x' - p) + r$ may underflow

B. When $x' + r > p,\ p < 2^n$:

- $x' + r$ may overflow
- $(x' - p) + r$ is within range (does not underflow)

To handle both scenarios organically, the error correction strategy shown in Fig. 9 is applied during the conversion process. This involves temporarily extending the field order of the finite field in which Goubin's conversion algorithm is applied in order to prevent underflows and overflows during conversion.

Given Goubin's arithmetic-to-Boolean conversion algorithm for a finite field of order $n$ as:

$$Goubin_n\ (x',\ r) \rightarrow (x'',\ r),\ \ in\ order\ that\ (x'\ +\ r)\ mod\ 2^n\ =\ x'' \oplus r$$

The application of the error correction strategy may be formalised for $|p| = n$ as:

$$ExtendedGoubin_p\ (x',\ r) \rightarrow (x'',\ r),\ \ in\ order\ that\ (x'\ +\ r)\ mod\ p\ =\ x'' \oplus r$$

The routine $ExtendedGoubin_p$ $(x',\ r)$ can be executed with $n$ extensions anywhere from $n + 4$ up to $2 \cdot n$.

In the example shown in Fig. 9, the field order $n$ is temporarily extended to $n + 4$ as follows:

1. Extend $x$ and r with additional bits set to 0

2. Compute $Goubin_{2n+4}$ $(x'\ -\ p,\ r) \rightarrow (x'',\ r)\ mod\ 2^{n+4}$

3. If $x''$ is positive (not beginning with $0xF$):
reduce $x''\ mod\ 2^n$, where $(x'',\ r)\ mod\ 2^n$ is the result

4. Else:
compute $Goubin_{2n}(x',\ r) \rightarrow (x'',\ r)$, where $(x'',\ r)$ is the result

These steps can be generalized for any extension of $n$ ranging from $n + 4$ to $2 \cdot n$.

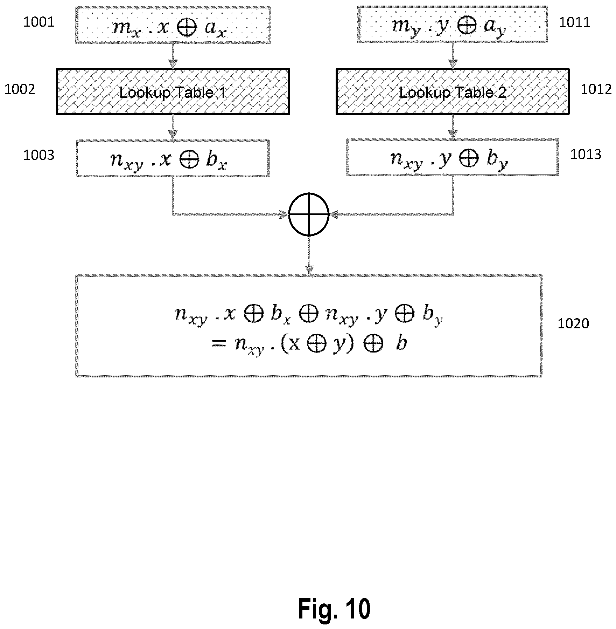

Fig. 10 illustrates an example implementation of key expansion with encoding according to one preferred embodiment of the invention. This process may be implemented using a combination of XOR operations on sub-keys and bytes substitution based on S-boxes. XOR operations on sub-keys may be carried out using a specific lookup table for each round of the AES key schedule to XOR encoded sub-key bytes, resulting in an encoded sub-key for the next round. Bytes substitution may be carried out using S-boxes that perform decoding, S-boxing, and re-encoding operations.

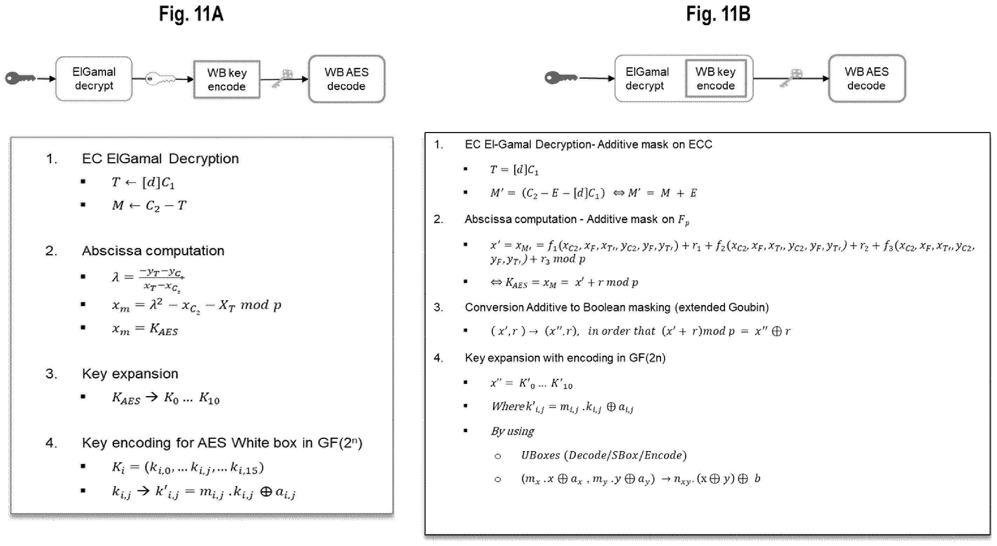

Fig. 11 provides a side-by-side comparison between the first prior art process for secure distribution of digital content, which is summarized in Fig. 11A, and the method for secure distribution of digital content according to one preferred embodiment of the invention, which is summarized in Fig. 11B.

Example implementation

In one preferred embodiment (such as that summarized in Fig. 11B), the obfuscation techniques are applied to the AES decryption algorithm. The algorithm and its key schedule may be white-boxed using, for example, control-flow diversification and/or Boolean masking. Other white-boxing techniques may be used. In some implementations, for example, each execution of the algorithm may follow a different control path, effectively mitigating the risk of side-channel attacks. In some examples, encrypted-composed-function methods may be deployed. For instance, AES decryption may be implemented as a series of lookups in key-dependent lookup tables with random bijections that do not directly correspond to individual steps of the algorithm. In such a way, the AES decryption algorithm is "white boxed" or, in other words, made resistant to white-box attacks. In a white-box attack context, an attacker may be able to observe not only the input and output of a routine but also the entire computation. The specific white-box implementation and/or techniques used may be kept secret by the technical solution provider. The technical solution provided may use, for example, the white-box implementations of AES proposed by Chow et al (2002)[10], or as described in e.g. Baek et al. (2016)[11] or Muir (2013)[12]. Any other suitable white-box implementation may be used. Additionally, the white-box AES decryption routine may be executed using an encoding of the AES key, wherein the encoding corresponds to the AES key encoded in a Galois field according to the white-box AES key encoding algorithm. AES key expansion may also be performed as part of the key encoding algorithm.

In this preferred embodiment, the AES key is encrypted using elliptic-curve (EC) ElGamal encryption. The client device may receive the encrypted AES key, for example, from a server device. The client device is also in possession of an authorizing key or transport key, which corresponds to a modified version of the secret key generated during a keygen phase of the EC-ElGamal algorithm used (e.g. by the server device) to encrypt the AES key. In this example, the modified version corresponds to a result of EC scalar multiplication of the secret key with a secret value. Depending on the particular use case, the secret value may be determined, for example, by a trusted license server. In some example scenarios, the license device may receive the secret key from the server device, compute its modified version, and then issue the authorizing key or transport key to the client device to authorize the user of the client device to access the content originally encrypted with the AES key (without revealing the AES key).

[10] Chow, Stanley & Eisen, Philip & Johnson, Harold & Oorschot, Paul. (2002). White-Box Cryptography and an AES Implementation. Selected Areas in Cryptography, Lecture Notes in Computer Science. 2595. 250-270. 10.1007/3-540-36492-7_17.

[11] C. H. Baek, J. H. Cheon and H. Hong, "White-box AES implementation revisited," in Journal of Communications and Networks, vol. 18, no. 3, pp. 273-287, June 2016, doi: 10.1109/JCN.2016.000043.

[12] Muir, James A.. "A Tutorial on White-box AES." IACR Cryptol. ePrint Arch. 2013 (2013): 104.

An example implementation of this preferred embodiment is provided below. References are made to the dataflow diagram of Fig. 6.

Upon receipt of the EC-ElGamal encrypted AES key 601A, the client device executes the EC-ElGamal decryption routine 602 with the transport key 620A. As the transport key 620A corresponds to a modified version of the expected decryption key, the result of the computation will be a correspondingly modified version of the expected decrypted value. This is done by exploiting the malleability of ElGamal encryption. In this example, the transport key corresponds to a result of EC scalar multiplication of the secret key with a secret value. Therefore, the output 603 of the EC-ElGamal decryption routine 602 will be the AES key masked by an additive value on the elliptic curve. These steps are formalised below for message M (i.e. the plaintext AES key).

$$\text{Input: } (C_1, C_2)$$

This is the received ciphertext (i.e. the encrypted message M) generated from the EC-ElGamal encryption routine with $Q$ the public key and $G$ the base point, where $C_1 = k. \, G$, $T = k. \, Q$ and $C_2 = M + T$.

Normally, ElGamal decryption would be computed as follows ($d$ being the secret key):

$$T \leftarrow [d]C_1$$

$$M \leftarrow C_2 - T$$

However, use of the transport key (in place of the original secret key) as decryption key implies that:

$$T' = f(T)$$

$$M' = C2 - T'$$

$$\rightarrow M' = M + E$$

where $E$ is the difference between the plaintext message and the masked message due to the masking achieved by EC scalar multiplication of the secret key with a secret value.

The modified ElGamal computation is as follows ($d$ being the secret key;):

$$M' \leftarrow (C_2 - E - [d]C_1)$$

At step 604, the abscissa (x-coordinate) of the EC point 603 obtained from the modified ElGamal computation is calculated. Additionally, an adjustment value, determined based at least in part on the value of the encrypted message M (e.g. by the server device), is adopted as an additive correction value for coordinate additive masking 604 of the EC point 603. The coordinate additive masking 604 of the EC point 603 with the additive correction value adds another masking layer. This further mask is different from one execution to another as the additive correction value is dependent on the AES key. Noise may also be added to the computation for further protection. Noise may include decoy data and/or computation, such as mock data and/or computation that is unrelated or unnecessary.

Fig. 8A shows the coordinate calculation without the further masking layer. Fig. 8B shows the coordinate additive masking calculation with the use of an additive correction value and noise.

The output 606 of this coordinate additive masking 604 is a prime-field value equivalent to the abscissa of the EC point 603 masked by a prime-field additive mask $r$.

At step 607, the additive mask $r$ must be converted into an equivalent Boolean mask for AES compatibility. This conversion can be achieved through adaption of Louis Goubin's conversion algorithm (or any other improvements published). In this implementation, as the values handled in the ElGamal computation are results of modular operations, Goubin's algorithm is adapted for conversion of a value masked using modular addition (arithmetic masking) into a value masked using XOR (Boolean masking).

Therefore, the output 608 of the conversion is $x'' \oplus r$ where:

$$x'' \oplus r = x' + r \bmod 2n$$

The r value may be hidden by bit expansion and may only be later recovered by applying the correct compression algorithm, which is kept secret.

The formal steps of Goubin's conversion algorithm are provided below:

5. Initialize a random value $\gamma$

6. Compute:

$$T = 2\gamma$$

$$x'' = \gamma \oplus r$$

$$\Omega = \gamma \wedge x''$$

$$x'' = T \oplus x'$$

$$\Gamma = \gamma \oplus x''$$

$$\Gamma = \Gamma \wedge r$$

$$\Omega = \Omega \oplus \Gamma$$

$$\Gamma = T \wedge x'$$

$$\Omega = \Omega \oplus \Gamma$$

7. Repeat the steps for $k = 1$ to $n - 1$:

$$\Gamma = T \wedge r$$

$$\Gamma = \Gamma \oplus \Omega$$

$$T = T \wedge x'$$

$$\Gamma = \Gamma \oplus T$$

$$T = 2\Gamma$$

8. Compute $x'' = x'' \oplus T$

When used for conversion from modular addition (modulo prime p), where:

$$|p| = n$$

The wrap-around nature of modular arithmetic means that off-the-shelf application of Goubin's conversion algorithm, which is devised for arithmetic-to-Boolean conversion, may lead to computing one or more out-of-range values (i.e. overflows and/or underflows) that would possibly result in aborted computation or an unintended output. Calculation of out-of-range values may occur in the following two cases:

C. When $x' + r \leq p$, $p < 2^n$:

- $x' + r$ is within range (does not overflow)

- $(x' - p) + r$ may underflow

D. When $x' + r > p$, $p < 2^n$:

- $x' + r$ may overflow

- $(x' - p) + r$ is within range (does not underflow)

To handle both scenarios organically, the error correction strategy shown in Fig. 9 is applied during the conversion process. This involves temporarily extending the field order of the finite field in which Goubin's conversion algorithm is applied in order to prevent underflows and overflows during conversion.
Given Goubin's arithmetic-to-Boolean conversion algorithm for a finite field of order $n$ as:

$$Goubin_n \ (x', r) \to (x'', r), \ \ in \ order \ that \ (x' + r) \ mod \ 2^n \ = x'' \oplus r$$

The application of the error correction strategy may be formalised for $|p| = n$ as:

$$ExtendedGoubin_p \ (x', r) \to (x'', r), \ \ in \ order \ that \ (x' + r) \ mod \ p \ = \ x'' \oplus r$$

The routine $ExtendedGoubin_p (x', r)$ can be executed with $n$ extensions anywhere from $n + 4$ up to $2 \cdot n$. In this implementation, the field order $n$ is temporarily extended to $n + 4$:

5. Extend $x$ and $r$ with additional bits set to 0

6. Compute $Goubin_{2n+4} (x' - p, r) \to (x'', r) \ mod \ 2^{n+4}$

7. If $x''$ is positive (not beginning with $0xF$):
reduce $x'' \ mod \ 2^n$, where $(x'', r) \ mod \ 2^n$ is the result

8. Else:
compute $Goubin_{2n}(x', r) \to (x'', r)$, where $(x'', r)$ is the result

These steps can be generalized for any extension of $n$ ranging from $n + 4$ to $2 \cdot n$.
At step 609, based on the masked key, we simultaneously apply key expansion and key encoding. Encoding may include an affine transformation in a Galois field. This process is shown in Fig. 10 and is implemented using a combination of XOR operations on sub-keys and bytes substitution based on S-boxes. XOR operations on sub-keys may be carried out using a specific lookup table for each round of the AES key schedule to XOR encoded sub-key bytes, resulting in an encoded sub-key for the next round. Bytes substitution may be carried out using S-boxes that perform decoding, S-boxing, and re-encoding operations.
The key steps of the example implementation described thus far are now summarized below.

1. ECC additive mask generation using EC-ElGamal decryption routine with transport key:

$$T = [d] \, C_1$$

$$M' = C_2 - E - T$$

$$\Leftrightarrow M' = M + E$$

2. Abscissa computation with modular additive mask in $\mathbb{F}_p$ or *GF(p)*:

$$x' = x_{M'} = f_1(x_{C2}, x_F, x_{T'}, y_{C2}, y_F, y_{T'}) + r_1 +$$

$$+ f_2(x_{C2}, x_F, x_{T'}, y_{C2}, y_F, y_{T'}) + r_2 +$$

$$+ f_3(x_{C2}, x_F, x_{T'}, y_{C2}, y_F, y_{T'}) + r_3 \bmod p$$

$$\Leftrightarrow K_{AES} = x_M = x' + r \bmod p$$

3. Conversion from modular additive mask in $\mathbb{F}_p$ or *GF(p)* to Boolean mask in $\mathbb{F}_2$ or *GF(2)*:

$$ExtendedGoubin_p (x', r) \to (x'', r), \quad in\ order\ that\ (x' + r) \bmod p = x'' \oplus r$$

4. Key expansion with encoding in *GF(2n)*:
$x'' = K'_0 ... K'_{10}$ where $k'_{i,j} = m_{i,j} \cdot k_{i,j} \oplus a_{i,j}$
by using:

- *UBox(Decode/SBox/Encode)*

- $(m_x \cdot x \oplus a_x, m_y \cdot y \oplus a_y) - n_{xy} \cdot (x \oplus y) \oplus b$

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method for secure processing of a usage key or transfer of a usage key between a server and a data processing device, the usage key encodable to execute a cryptographic operation, the computer-implemented method comprising:

receiving, at the data processing device, the usage key encrypted according to a transportation encryption algorithm;

processing, at the data processing device, the encrypted usage key with a modified version of a decryption routine of the transportation encryption algorithm, wherein the modified version of the decryption routine is such that it returns a modified version of the usage key, different from the usage key; and

converting, at the data processing device, the modified version of the usage key into an encoding of the usage key, the encoding of the usage key operable to execute the cryptographic operation using the encoding of the usage key.

2. The computer-implemented method of claim 1, wherein:
the cryptographic operation comprises a white-box implementation of a cryptographic algorithm, the encoding of the usage key operable to execute the cryptographic operation by executing the white-box implementation of the cryptographic algorithm.

3. The computer-implemented method of claim 1 or claim 2, wherein the cryptographic operation comprises one or more of:

a decryption routine of a usage encryption algorithm;
an encryption routine of a usage encryption algorithm;
a signing routine of a cryptographic signature algorithm; and
a signature verification routine of a cryptographic signature algorithm.

4. A computer-implemented method according to any one of claims 1 to 3, wherein:

the modified version of the decryption routine of the transportation encryption algorithm is obtained by applying a mask to the decryption routine of the transportation algorithm; and

an output of the modified version of the decryption routine of the transportation encryption algorithm is equivalent to the usage key masked with an intermediate mask, wherein the intermediate mask is optionally an arithmetic mask or a Boolean mask.

5. A computer-implemented method according to any one of claims 1 to 4, wherein:
the transportation encryption algorithm is an asymmetric encryption algorithm, such as an elliptic curve algorithm.

6. A computer-implemented method according to claim 5, wherein:

the output of the modified version of the decryption routine of the transportation encryption algorithm is equivalent to the usage key masked with an intermediate mask in the form of an elliptic curve arithmetic mask, which optionally includes an elliptic curve additive value; and/or

the output of the modified version of the decryption routine of the transportation encryption algorithm is equivalent to the usage key masked with an intermediate mask in the form of a prime-field arithmetic mask, which is optionally generated from an additive correction based on the usage key.

7. A computer-implemented method according to any one of claims 1 to 6, wherein:
the transportation encryption algorithm substantially implements one or more of: ElGamal encryption, AES encryption, RSA encryption.

8. A computer-implemented method according to any one of claims 1 to 7, wherein:
when the intermediate mask is incompatible with the cryptographic operation, converting the modified version of the usage key into an encoding of the usage key comprises applying a mask conversion algorithm to the modified version of the usage key, the mask conversion algorithm configured to convert the intermediate mask into a second mask of a different type which is compatible with the cryptographic operation.

9. A computer-implemented method according to claim 8, wherein:

the intermediate mask is an arithmetic mask and the second mask is a Boolean mask; or

the intermediate mask is a Boolean mask and the second mask is an arithmetic mask.

10. A computer-implemented method according to claim 9, wherein:
applying the mask conversion algorithm comprises applying Goubin's algorithm for converting from arithmetic masking to Boolean masking or Goubin's algorithm for converting from Boolean masking to arithmetic masking.

11. A computer-implemented method according to claim 10, wherein:

the mask conversion algorithm includes an error handling strategy for converting a prime-field arithmetic mask into a Boolean mask, the error handling strategy comprising receiving an input masked using modular addition in a prime field, and returning an output masked using an XOR function; and
optionally, the error handling strategy comprises overflow and underflow prevention by temporarily extending the order of a finite field.

12. A computer-implemented method according to any one of claims 1 to 11, wherein:

when the intermediate mask is compatible with the cryptographic operation, converting the modified version of the usage key into an encoding of the usage key comprises applying a key encoding algorithm to the modified version of the usage key, the key encoding algorithm configured simultaneously to expand and encode the modified version of the usage key; or
when the intermediate mask is incompatible with the cryptographic operation, converting the modified version of the usage key into an encoding of the usage key further comprises applying a key encoding algorithm to an output of the mask conversion algorithm, the key encoding algorithm configured simultaneously to expand and encode the modified version of the usage key.

13. A computer-implemented method according to any one of claims 1 to 12, wherein:
the key encoding algorithm is a white-box encoding of a key encoding algorithm, configured to generate an encoding of a usage key which is usable with a white-box implementation of the cryptographic algorithm.

14. The computer-implemented method of any one of claims 1 to 13, further comprising:
executing the white-box implementation of the cryptographic algorithm to execute the cryptographic operation on received data.

15. A computer program or computer program product comprising instructions which, when the program is executed by a computer, cause the computer to execute the computer-implemented method of any one of claims 1 to 14.

Fig. 1

Server device

Client device

201 → ElGamal encrypt 202 → 203 → ElGamal decrypt 204 → 205 → WB key encode 206 → 207 → WB AES decrypt 208

**Fig. 2**

Server device

Client device

301 → WB key encode 302 → 303 → ElGamal encrypt 304 → 305 → ElGamal decrypt 306 → 307 → WB AES decrypt 308

**Fig. 3**

Server device | Client device

EIGamal
encrypt

401

402

403

EIGamal
decrypt

encode
AES key

404

405

406

WB AES
decrypt

407

**Fig. 4A**

EP 4 773 542 A1

Server device | Client device

Transport
encrypt

411

412

413

Transport
decrypt

encode
usage key

414

415

416

WB usage
Algorithm

417

**Fig. 4B**

S500: receive a usage key encrypted according to a transportation encryption algorithm

S502: process the encrypted usage key with a modified version of a decryption routine of the transportation encryption algorithm, wherein the modified version of the decryption routine is such that it returns a modified version of the usage key, different from the usage key

S504: convert the modified version of the first key into an encoding of the usage key, the encoding operable to decrypt data using a decryption routine of the usage encryption algorithm

S506: execute the decryption routine of the usage encryption algorithm using the encoding of the usage key to decrypt digital content

Fig. 5

Fig. 6A

601A ECC-encrypted usage key

601B RSA-encrypted usage key

620A Transport key (ECC)

620B Transport key (RSA)

602 ECC decryption routine

605 RSA decryption routine

603 $M + E$ in $ECC$

604 Coordinate masking

606 $x' + r$ in $Fp$

607 Arithmetic to Boolean masking conversion

608 $x'' \oplus r$ in $GF(2^n)$

609 WB key encoding (+ key expansion)

610 $z.M \oplus t$ in $GF(2^n)$

611 WB usage cryptographic routine

612 Cryptographic result

Fig. 6B

**Fig. 7**

Fig. 8A

Fig. 8B

EP 4 773 542 A1

901    911

$$000 \quad x' - p \quad 000 \quad r$$

Goubin's
Algorithm    930

$$000 \quad x'' \quad 000 \quad r$$

902    912

$$111 \quad x'' \quad 000 \quad r$$

903    913

$$x'' \quad r$$

920

904    914

$$x' \quad r$$

Goubin's
Algorithm    931

$$000 \quad x'' \quad 000 \quad r$$

905    915

$$x'' \quad r$$

920

**Fig. 9**

$$m_x \cdot x \oplus a_x \quad \text{1001}$$

$$m_y \cdot y \oplus a_y \quad \text{1011}$$

1002 — Lookup Table 1

1012 — Lookup Table 2

$$1003 \quad n_{xy} \cdot x \oplus b_x$$

$$n_{xy} \cdot y \oplus b_y \quad 1013$$

$$n_{xy} \cdot x \oplus b_x \oplus n_{xy} \cdot y \oplus b_y = n_{xy} \cdot (x \oplus y) \oplus b \quad 1020$$

**Fig. 10**

## Fig. 11A

EIGamal decrypt → WB key encode → WB AES decode

1. EC EIGamal Decryption
   - $T \leftarrow [d]C_1$
   - $M \leftarrow C_2 - T$

2. Abscissa computation
   - $\lambda = \dfrac{-y_T - y_{C_2}}{x_T - x_{C_2}}$
   - $x_m = \lambda^2 - x_{C_2} - X_T \bmod p$
   - $x_m = K_{AES}$

3. Key expansion
   - $K_{AES} \rightarrow K_0 \dots K_{10}$

4. Key encoding for AES White box in GF($2^n$)
   - $K_i = (k_{i,0}, \dots k_{i,j}, \dots k_{i,15})$
   - $k_{i,j} \rightarrow k'_{i,j} = m_{i,j} \cdot k_{i,j} \oplus a_{i,j}$

## Fig. 11B

EIGamal decrypt | WB key encode → WB AES decode

1. EC El-Gamal Decryption- Additive mask on ECC
   - $T = [d]C_1$
   - $M' = (C_2 - E - [d]C_1) \Leftrightarrow M' = M + E$

2. Abscissa computation - Additive mask on $F_p$
   - $x' = x_{M'} = f_1(x_{C_2}, x_F, x_{T'}, y_{C_2}, y_F, y_{T'}) + r_1 + f_2(x_{C_2}, x_F, x_{T'}, y_{C_2}, y_F, y_{T'}) + r_2 + f_3(x_{C_2}, x_F, x_{T'}, y_{C_2}, y_F, y_{T'}) + r_3 \bmod p$
   - $\Leftrightarrow K_{AES} = x_M = x' + r \bmod p$

3. Conversion Additive to Boolean masking (extended Goubin)
   - $(x', r) \rightarrow (x'', r)$, in order that $(x' + r) \bmod p = x'' \oplus r$

4. Key expansion with encoding in GF(2n)
   - $x'' = K'_0 \dots K'_{10}$
   - $Where\, k'_{i,j} = m_{i,j} \cdot k_{i,j} \oplus a_{i,j}$
   - By using
     - UBoxes (Decode/SBox/Encode)
     - $(m_x \cdot x \oplus a_x, m_y \cdot y \oplus a_y) \rightarrow n_{xy} \cdot (x \oplus y) \oplus b$

Europäisches
Patentamt
European
Patent Office
Office européen
des brevets

## EUROPEAN SEARCH REPORT

**Application Number**

EP 25 15 0252

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/106439 A1 (ARRIS ENTPR LLC [US]) 14 June 2018 (2018-06-14) * paragraph [0076]; figure 5D * ----- | 1-15 | INV. H04L9/08 H04L9/14 |
| X | WO 2009/053605 A2 (FRANCE TELECOM [FR]; BILLET OLIVIER [FR]; PHAN DUONG HIEU [FR]) 30 April 2009 (2009-04-30) * pages 14-21; figure 2 * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 19 June 2025 | Manet, Pascal |

EPO FORM 1503 03.82 (P04C01)

## ANNEX TO THE EUROPEAN SEARCH REPORT
## ON EUROPEAN PATENT APPLICATION NO.

EP 25 15 0252

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | Publication date | Patent family member(s) | | Publication date |
|---|---|---|---|---|
| WO 2018106439 A1 | 14-06-2018 | US | 2018165454 A1 | 14-06-2018 |
| | | WO | 2018106439 A1 | 14-06-2018 |
| WO 2009053605 A2 | 30-04-2009 | FR | 2922393 A1 | 17-04-2009 |
| | | WO | 2009053605 A2 | 30-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. ELGAMAL**. A public key cryptosystem and a signature scheme based on discrete logarithms. *IEEE Transactions on Information Theory*, July 1985, vol. 31 (4), 469-472
- **KOBLITZ, NEAL**. Elliptic Curve Cryptosystems.. *Mathematics of Computation*, 1987, vol. 48 (177), 203-9, https://doi.org/10.2307/2007884
- A Sound Method for Switching between Boolean and Arithmetic Masking. **L. GOUBIN**. Proceedings of CHES'2001, LNCS. Springer-Verlag, 2001, vol. 2162, 3-15
- Switching Blindings with a View Towards IDEA. **NEIBE, O.** ; **PULKUS, J.** CHES 2004. LNCS. Springer, 2004, vol. 3156, 230-239
- Efficient and provably secure methods for switching from arithmetic to boolean masking.. **DEBRAIZE, BLANDINE**. Cryptographic Hardware and Embedded Systems-CHES 2012: 14th International Workshop, Leuven, Belgium, September 9-12, 2012. Proceedings 14. Springer, 2012
- **HUTTER, MICHAEL** ; **TUNSTALL, MICHAEL**. Constant-time higher-order Boolean-to-arithmetic masking. *Journal of Cryptographic Engineering*, 2019, vol. 9
- **CORON, JEAN-SÉBASTIEN**. *High-Order Conversion from Boolean to Arithmetic Masking*, 2017, 93-114
- **CHOW, STANLEY** ; **EISEN, PHILIP** ; **JOHNSON, HAROLD** ; **OORSCHOT, PAUL**. White-Box Cryptography and an AES Implementation. *Selected Areas in Cryptography, Lecture Notes in Computer Science*, 2002, vol. 2595, 250-270
- **C. H. BAEK** ; **J. H. CHEON** ; **H. HONG**. White-box AES implementation revisited. *Journal of Communications and Networks*, June 2016, vol. 18 (3), 273-287
- **MUIR, JAMES A.** A Tutorial on White-box AES.. *IACR Cryptol. ePrint Arch.*, 2013, vol. 2013, 104